# EUROPÄISCHE PATENTSCHRIFT

(11) **EP 1 075 591 B1**
(45) Veröffentlichungstag und Bekanntmachung des Hinweises auf die Patenterteilung: **12.03.2003**
(21) Anmeldenummer: 99947072.7
(22) Anmeldetag: 16.01.1999
(51) Int. Cl.: F02B 1/12, F02B 75/02

(54) **VERFAHREN ZUM BETRIEB EINES IM VIERTAKT ARBEITENDEN VERBRENNUNGSMOTORS**
METHOD FOR OPERATING A FOUR-STROKE INTERNAL COMBUSTION ENGINE
PROCEDE DE FONCTIONNEMENT D'UN MOTEUR A COMBUSTION INTERNE A QUATRE TEMPS

(30) Priorität: 07.02.1998 DE 19804983
(43) Veröffentlichungstag der Anmeldung: 14.02.2001
(73) Patentinhaber: DaimlerChrysler AG, 70567 Stuttgart (DE)
(72) Erfinder: NIEBERDING, Rolf-Günther, 70182 Stuttgart (DE)
(86) Internationale Anmeldenummer: EP9900226
(87) Internationale Veröffentlichungsnummer: WO99040301

(56) Entgegenhaltungen:
- DE-A- 2 017 153
- DE-A- 19 519 663
- DE-B- 1 122 763
- DE-C- 464 601
- US-A- 5 609 131

## Beschreibung

Die Erfindung betrifft ein Verfahren zum Betrieb eines im Viertakt arbeitenden Verbrennungsmotors der im Oberbegriff des Anspruchs 1 angegebenen Gattung.

Verbrennungsmotoren mit innerer Verbrennung bieten bei Kompressionszündung homogener, magerer Luft/Kraftstoff-Gemische die Möglichkeit einer geringen Stickoxidbildung und eines hohen thermischen Wirkungsgrades. Diese Vorteile stellen sich aber nur in einem engen Betriebsbereich ein, der von einer Vielzahl sich schnell ändernder Rahmenbedingungen abhängt.

Bei Kompressionszündung wird das Luft/Kraftstoffgemisch durch Kompressionswärme zur Entzündung gebracht. Nach dem Beginn der Entzündung wird durch die dabei freigesetzte Energie ein selbstbeschleunigender Verbrennungsprozeß eingeleitet. Eine zu niedrige Kompression führt zu verzögerter, unvollständiger Verbrennung, eine zu hohe Kompression zu unzulässig steilen Druckanstiegen und zu Gasschwingungen im Arbeitsraum (klopfende Verbrennung).

In der DE 195 19 663 A1 ist ein Verfahren zum Betrieb eines Verbrennungsmotors mit Kompressionszündung beschrieben. Hier wird in einer ersten Stufe ein mit äußerer Gemischbildung erzeugtes homogenes und mageres Luft/Kraftstoffgemisch bis nahe an die Zündgrenze komprimiert. In einer zweiten Stufe wird eine Zusatzmenge des gleichen Kraftstoffs fein zerstäubt und unter Vermeidung von Wandberührung in den Arbeitsraum eingespritzt. Der spät eingespritzte Kraftstoff bildet eine Gemischwolke, die sich entzündet, da deren Zündgrenze aufgrund des höheren Kraftstoffgehalts unterhalb der in der ersten Stufe erreichten Kompressionstemperatur liegt.

Der Erfindung liegt die Aufgabe zugrunde, ein Verfahren der im Oberbegriff des Anspruchs 1 angegebenen Gattung zu schaffen, mit dem eine dem jeweiligen Betriebsbereich angepaßte sowie verbrauchs- und schadstoffarme Verbrennung möglich ist.

Die Aufgabe wird durch ein Verfahren mit den Merkmalen des Anspruchs 1 gelöst.

Es ist ein Verfahren zum Betrieb eines Verbrennungsmotors mit Kompressionszündung sowie einer direkten Kraftstoffeinspritzung vorgesehen, bei dem zu Beginn des Verdichtungstaktes im Brennraum eine vorgemischte magere Kraftstoff/Luft-Ladung enthalten ist, wobei die Ladung bis zur Selbstzündungsgrenze verdichtet und während des Kompressionshubes Kraftstoff in den Brennraum derart eingespritzt wird, dass die in den Brennraum während des Kompressionshubes eingespritzte Kraftstoffmenge zeitlich und örtlich in mehreren Einspritzvorgängen eingebracht wird, so daß in den Gemischbereichen mit der späteren Einspritzung die Zündwilligkeit verringert ist.

Der Zeitpunkt und Verlauf der Verbrennung sind entscheidend für verbrauchs- und schadstoffarmen sowie aussetzer- und klopffreien Betrieb. Ein Verbrennungsbeginn im Bereich des oberen Totpunktes ist verbrauchs- und schadstoffoptimal. Dagegen läßt eine verschleppte Verbrennung den Kraftstoffverbrauch sowie die Schadstoffemission ansteigen und führt zu Verbrennungsaussetzern, eine zu frühe Verbrennung hingegen führt zu unzulässigen Druckanstiegen und Spitzendrücken mit Klopferscheinungen.

In einem Verbrennungsmotor wird durch die geometrische Kompression des abgeschlossenen maximalen Ausgangsvolumens bis auf ein verbleibendes Restvolumen die Temperatur des Gemisches erhöht. In dem komprimierten Volumen stellt sich eine Temperatur ein, die das Gemisch über die Zeit zur Entzündungsschwelle bringt. Der Verbrennungsprozeß, der sich an die Kompressionszündung des Gemisches anschließt, ist ein aufgrund der durch die Verbrennung freigesetzten Energie selbstbeschleunigender Prozeß. Während des Verbrennungsprozesses beschleunigt sich die Umsetzung weiter. Die hohe Umsetzungsgeschwindigkeit der Verbrennung führt zu starken Druckanstiegen im Brennraum, die eine unerwünschte Form der Verbrennung darstellen. Die im Brennraum zur Entzündung bereite Kraftstoffmenge wirkt sich auf den Druckverlauf aus, d.h. je größer diese Kraftstoffmenge ist, desto stärker wird der Anstieg der Reaktionstätigkeit und die Steilheit des Druckanstiegs. Die Grenzen der Verbrennung bei Kompressionszündung homogener, magerer Gemische hin zu höherer Last mit demzufolge größeren Kraftstoffmengen im Brennraum ist auf die zu homogene Temperaturverteilung im Luft/Kraftstoff-Gemisch im Brennraum zurückzuführen. Für geringe Kraftstoffmengen im Brennraum zeigt sich das Problem nicht, da die freigesetzte Energiemenge nicht so groß ist, daß die kontinuierliche Selbstbeschleunigung des Verbrennungsprozesses bis hin zu einer unerwünscht steilen Drucksteigerung im Brennraum führen könnte.

Bei homogener Gemischverteilung und Kompression wird zeitgleich eine große Menge an Luft/Kraftstoff-Gemisch in Zündungsnähe gebracht und viele Gemischanteile erreichen zur gleichen Zeit die Selbstzündungsbedingung. Dem Prinzip der Selbstbeschleunigung ist immanent die Aktivierung einer Reaktionstätigkeit durch eine differentielle Energiemenge, die zur Freisetzung des Mehrfachen der freigesetzten differentiellen Energiemenge führt.

Die Verzögerung der Entzündungen des Gemisches kann die Energiefreisetzung verschleppen, so daß sich begrenzte Drucksteigerungen im Brennraum einstellen, die in einem akzeptablen Bereich liegen. Eine Verzögerung der Entzündung erfolgt über eine Energieaufnahme der freigesetzten Verbrennungsenergie. Da sich der Entzündungsvorgang als energetisch integraler Prozeß darstellt, kann durch zeitliche und örtliche Spreizung des Selbstzündungsvorgangs eine Verzögerung in der Energiefreisetzung erreicht werden. Anstelle der Homogenität des Gemisches mit ähnlicher Zündungsneigung wird nunmehr ein Gradient der Zündwilligkeit des Gemisches zugrunde gelegt, was zu einer zeitlich verzögerten Energieumsetzung im Brennraum führt, wobei aufgrund verzögerter Verbrennung die Druckanstiege geringer ausfallen. Der Gradient der Zündwilligkeit im Gemisch findet sich differentiell in allen Gemischanteilen, die von der Einspritzung erfaßt werden. Der Gradient darf nicht so groß sein, daß sich ein Temperaturgradient im Gemisch einstellt, daß die Energieweitergabe der Verbrennungsreaktion durch Wärmeleitung bestimmt wird.

Eine zeitliche und örtliche Spreizung der Zündwilligkeit kann durch eine unterschiedliche Energieaufnahme über der Zeit und dem Raum eingestellt werden. Durch die Verdunstungs- und Vermischungsenergie des Kraftstoffs in der Luft sowie die spezifische Wärmekapazität des Gemisches während der Selbstzündungsphase wird Energie aufgenommen. Mit Hilfe innerer Gemischbildung bei der Hubkolbenmaschine ist es möglich, einen lokalen Gradienten der Zündwilligkeit über das Gemischvolumen zu erzeugen. Die Kraftstoffmenge wird in das im Brennraum vorhandene Medium so eingebracht, daß sich Brennraumbereiche unterschiedlicher Kraftstoffverdampfung ergeben. In den Bereichen frühester und bester Verdampfung erhalten die Kraftstoffanteile die höchste Energiezufuhr über die Zeit und bilden aufgrund dessen die höchste Zündneigung aus. Die Bereiche noch unvollständiger Vermischung nehmen noch während der Verdampfung Energie auf, verzögern also die Selbstzündungsneigung. Die Energieaufnahme durch Verdampfung bewirkt den Gradienten der Zündwilligkeit über den Brennraum. Für die Laststeigerung bei der Verbrennung mit Kompressionszündung ist eine Gradientenbildung über die Schichtung des Einspritzvorgangs in mehrere Einspritzvorgänge möglich. Eine zeitlich geschichtete Einspritzung besteht während der Kompression aus bereits sehr zündwilligen Kraftstoffbereichen. Die dem Brennraum frisch zugeführten Kraftstoffanteile nehmen während ihrer Aufbereitungsphase Energie aus dem komprimierten Gemisch auf und verzögern den Entzündungsprozeß des bereits vorkomprimierten Gemisches. Die Energieaufnahme vermindert die Drucksteigerungen, d.h. der Gradient der Zündwilligkeit wird durch die Trennung des Einspritzvorgangs in mehrere Teileinspritzungen beeinflußt.

Für die Gestaltung einer Hubkolbenmaschine mit variabler effektiver Verdichtung, beispielsweise über die freie Ansteuerung der Einlaß- und Auslaßorgane über die gleichmäßige Veränderung des Brennraumvolumens, kann die Gemischbildung mit der Rückhaltung von Abgasen im Brennraum zur Beeinflussung des nächsten Verbrennungsvorgangs kombiniert werden. Für die Abgasrückhaltung wird bei Verringerung des Brennraumvolumens das Auslaßorgan früher geschlossen, wodurch die Abgasmenge über das Minimalvolumen komprimiert und anschließend expandiert wird. Bei einer frühen Öffnung direkt nach dem Zeitpunkt des Minimalvolumens und des anschließenden Druckausgleichs zwischen Brennraum und Umgebung stellt sich eine gleichmäßige Schichtung von heißem Abgas gegenüber dem kalten Frischgas im Brennraum ein. Bei einer späten Öffnung der Einlaßorgane ist aufgrund der größeren Druckdifferenz eine höhere Einströmenergie gegeben, die die Schichtung von Abgas und Frischgas vermindert.

In einer zweischichtigen Brennraumtemperaturverteilung kann für geringe Lasten und die demzufolge geringe Kraftstoffmenge der Kraftstoff früh eingespritzt werden. Die geringen Kraftstoffmengen verteilen sich gut und gleichmäßig im Frischgas. Die kompakte Ladung des Abgases erhält aufgrund ihres geringen Oberflächen/Volumen-Verhältnisses eine hohe Temperatur, die zur leichten Entzündung des frischen Gemisches mit hohem Luftüberschuß führt. Der hohe Luftüberschuß verhindert die Reaktionsbeschleunigung hin zu steilen Druckanstiegen. Die Einbringung des Kraftstoffs in den Frischladungsbereich wirkt den ungewollten Prozessen des Kraftstoffumsatzes entgegen wie beispielsweise der Hochtemperaturverbrennung, die zur Bildung von NOx führt oder der Dehydration und Koagulation, aus der Ruß entsteht. Für höhere Lasten wird die Öffnung des Einlaßventils verzögert, was zu einer besseren Vermischung des heißen Abgases und der kälteren Frischluft führt. Für eine homogene Temperaturverteilung im Brennraum kann eine späte Einspritzung oder die Trennung des Einspritzvorgangs im oben dargestellten Sinne eine Gradienten in der Zündwilligkeit herbeiführen. Die frühe Einspritzung während der turbulenten Gemischbildung des Frischgases mit den Abgasanteilen im Brennraum infolge des spät erfolgenden Öffnens des Einlaßventils ermöglicht dem früher eingespritzten Anteil des Kraftstoffs sich homogen im Brennraum zu verteilen und aufgrund von Temperaturerhöhung über die Aufbereitungszeit zu entzünden. Der zweite Anteil des Kraftstoffs wird später zugeführt, um ein lokales Senken der Zündwilligkeit aufgrund von Energieaufnahme durch Verdampfung herbeizuführen.

Ein Grenzwert des Verfahrens ist durch die optimal gleichmäßige Gemischaufbereitung durch sehr frühzeitige Einspritzung bestimmt. Der entgegengesetzte Grenzwert wird durch die Gemischeinbringung in dem Brennraum zu einem so späten Zeitpunkt gebildet, bei dem die Verdampfung des Kraftstoffs nicht mehr vor der Umsetzung ausreichend großer Anteile des aufbereiteten Kraftstoffs stattfinden kann. Es kommt aufgrund der hohen Energiezustände in der Umgebung des unvollständig aufbereiteten und unverbrannten Kraftstoffs zu Dehydrationsvorgängen und Koagulationen in fetten Bereichen bis hin zu Rußbildung im Brennraum und im Abgasstrang. Das erfindungsgemäße Verfahren wird ausschließlich zwischen diesen beiden genannten Grenzen durchgeführt.

Körperschall, Ionenstrom und Drehungleichförmigkeit sind Meßgrößen, die zeitgleich mit der Verbrennung deren Lage und Verlauf wiedergeben und dadurch die Voraussetzung für einen schnellen Regeleingriff schaffen. Dieser Regeleingriff wird unter Verwendung abgelegter Kennfelder oder durch die Anwendung schneller, lernfähiger Elektronik nach dem Prinzip der neuronalen Netze ermöglicht. Zusätzlich zu den die Verbrennung überwachenden Daten berücksichtigt diese Elektronik noch die Ventilsteuerzeiten und die Einspritzzeitpunkte sowie die daraus abgeleiteten Werte für den Luftüberschuß.

Ein Ausführungsbeispiel der Erfindung ist nachstehend anhand der Zeichnung näher erläutert. In der Zeichnung zeigt:
- Fig. 1: eine schematische Darstellung eines Verbrennungsmotors. mit Steuergerät für die Gaswechselorgane und die Kraftstoffeinspritzventile,
- Fig. 2: einen Schnitt durch einen Arbeitsraum mit Kraftstoffeinspritzventil und Bereichen unterschiedlicher Zündwilligkeit bei direkter Kraftstoffeinspritzung in den späten Kompressionstakt.

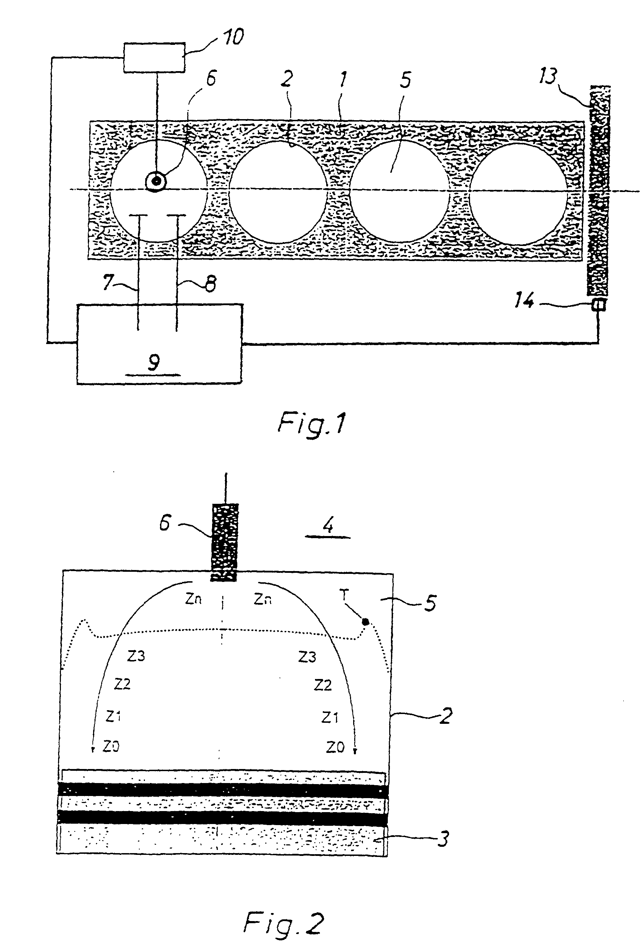

Der in den Fig. 1 und 2 schematisch dargestellte Verbrennungsmotor besitzt einen Zylinderblock 1 mit vier Zylindern 2, in denen Kolben 3 dichtend geführt sind und die durch einen Zylinderkopf 4 verschlossen sind. Zylinder 1, Kolben 3 und Zylinderkopf 4 umschließen einen Brennraum 5, in dem die Verbrennung stattfindet.

Im Zylinderkopf 4 finden sich pro Brennraum 5 ein Kraftstoffeinspritzventil 6, ein Einlaßventil 7 und ein Auslaßventil 8. Die Gaswechselventile 7, 8 werden von einer Ventilsteuereinheit 9 geöffnet und geschlossen. Das Kraftstoffeinspritzventil 6 wird bezüglich Einspritzzeitpunkt und Kraftstoffmenge von einer Einspritzsteuerung 10 betätigt, die zur abgestimmten Steuerung der Gaswechselventile 7, 8 mit der Ventilsteuereinheit 9 verbunden ist.

Auf dem aus dem Zylinderblock 1 herausstehenden Ende der Kurbelwelle befindet sich ein Schwungrad 13, in dessen Bereich ein Drehzahlsensor 14 zum Messen der Drehungleichförmigkeit der Kurbelwelle vorgesehen ist. Der Drehzahlsensor 14 sowie weitere geeignete Sensoren liefern Echtzeitsignale von Lage und Verlauf der Verbrennung, so daß unter Berücksichtigung dieser Werte die Steuerung des Kraftstoffeinspritzventils 6 und der Gaswechselventile 7, 8 erfolgen kann.

In Fig. 2 ist ein Schnitt durch den Brennraum 5 dargestellt, der von Zylinder 2, Kolben 3 und Zylinderkopf 4 begrenzt ist und in den das Krafstoffeinspritzventil 6 Kraftstoff einspritzt. Die mit Z₀ bis Zn bezeichneten Punkte stellen schematisch die Kraftstoffanteile dar, die mit zunehmendem Index später in den Brennraum gelangten und damit eine niedrigere Zündwilligkeit aufweisen. Durch die Trennung des Einspritzvorgangs in mehrere Teileinspritzungen wird ein Gradient der Zündwilligkeit beeinflußt. Die Elemente mit hohen Indizes nehmen während ihrer Verdampfungsphase Energie aus den Gemischbereichen mit sonst homogener Temperaturverteilung auf, die aus Kraftstoffanteilen mit niedrigen Indizes bestehen. Die Temperaturverhältnisse während der Kompressionsphase im Brennraum 5 zeigt ein mit T bezeichnetes Temperaturprofil durch denselben.

Das erfindungsgemäße Verfahren funktioniert folgendermaßen: Durch ein Einlaßorgan 7 gelangt entweder Luft oder ein mageres Kraftstoff/Luft-Grundgemisch in den Brennraum 5. Dort wird das Gemisch mit heißem Abgas vermisch und/oder bis zur Selbstentzündungsgrenze verdichtet. Nach Beginn der Verbrennung setzt sich diese durch die freigesetzte Wärme selbstbeschleunigend fort, zumal viele Gemischanteile zu gleicher Zeit die Selbstzündungsbedingungen erreichen. Bei geringen Kraftstoffmengen im Brennraum 5 ist die freigesetzte Energiemenge nicht so groß, daß sie zu einer deutlichen Drucksteigerung im Brennraum führen kann. Dies ändert sich jedoch mit steigendem Kraftstoffgehalt im Brennraum 5. Die bei homogener Kraftstoffverteilung große, zündbereite Gemischmenge würde zu einer ungewollten Verbrennung mit steilen Druckanstiegen und hohen Spitzendrücken sowie starken Druckschwingungen im Brennraum 5 führen.

Dieses für die Kompressionszündung homogener Gemische entscheidende Problem wird durch die vorliegende Erfindung beseitigt, wobei dies einerseits durch die Regelung der Verdichtung im Brennraum 5 und andererseits durch die Regelung der Kraftstoffverteilung im Gemisch erfolgt. Diese Maßnahmen können einzeln oder auch in Kombination vorgenommen werden.

Die unterschiedliche Kraftstoffverteilung wird durch späte Direkteinspritzung in das homogene Grundgemisch erreicht. Durch die Verdampfungs- und Gemischbildungswärme der einzelnen Kraftstofftröpfchen wird die Gemischtemperatur lokal verringert und dadurch auch dessen lokale Zündwilligkeit. Das führt zu einem verringerten Druckanstieg aufgrund der verzögerten Energiefreisetzung der gesamten Kraftstoffenergie.

Zu Beginn des Verdichtungstaktes im Brennraum ist eine vorgemischte magere Kraftstoff/Luft-Ladung enthalten, die bis zur Selbstzündungsgrenze verdichtet wird, wobei während des Kompressionshubes Kraftstoff in den Brennraum eingespritzt wird, so daß die in den Brennraum während des Kompressionshubes eingespritzte Kraftstoffmenge zeitlich und örtlich derart in mehreren Einspritzvorgängen eingebracht wird, daß in den Gemischbereichen mit der späteren Einspritzung die Zündwilligkeit verringert ist.

Für eine Laststeigerung bei Verbrennung mit Kompressionszündung ist eine Gradientenbildung der Zündwilligkeit über die Schichtung des Einspritzvorgangs in mehrere Einspritzvorgänge vorteilhaft.

Die zeitlich geschichtete Einspritzung besteht während der Kompression aus bereits sehr zündwilligen Kraftstoffbereichen und solchen, die gerade in den Brennraum gelangen. Die frisch zugeführten Kraftstoffanteile nehmen während ihrer Aufbereitungsphase Energie aus dem vorkomprimierten Gemisch und verzögern dessen Entzündungsprozeß mit der Folge verminderter Drucksteigerungen.

Bei Abgasrückhaltung wird das Auslaßventil 8 früher geschlossen, wodurch das Restgas im Gaswechseltotpunkt komprimiert und anschließend expandiert wird. Bei einer frühen Öffnung des Einlaßventils 7 kurz nach dem Gaswechseltotpunkt und dem sich daran anschließenden Druckausgleich zwischen Brennraum 5 und Umgebung bildet sich im Brennraum 5 eine gleichmäßige Schichtung aus heißem Abgas und kaltem Frischgas aus. Bei einer späteren Öffnung der Einlaßventile 7 stellt sich wegen des höheren Unterdrucks und der dadurch bedingten höheren Einströmenergie eine geringere Schichtung aus Abgas und Frischgas ein.

Bei einer zweischichtigen Temperaturverteilung im Brennraum 5 kann die bei niedrigen Lasten kleine Kraftstoffmenge früh eingespritzt werden. Aufgrund der langen Gemischbildungszeiten verteilen sich die kleinen Kraftstoffmengen gleichmäßig im Frischgas. Das geschichtete Abgas behält aufgrund seines geringen Oberflächen/Volumenverhältnisses seine hohe Temperatur, die zur sicheren Entzündung des mageren Gemischs führt. Der hohe Luftüberschuß verhindert eine Reaktionsbeschleunigung mit daraus folgendem steilen Druckanstieg. Die Einbringung des Kraftstoffs in die Frischladung verhindert die Folgen einer Hochtemperaturverbrennung mit NOxund Rußbildung.

Für höhere Lasten wird die Öffnung des Einlaßventils 7 verzögert, und zwar zur Erhöhung der Differenz zur Umgebungsbedingung, was aufgrund der stärkeren Turbulenz zu einer Vermischung von heißem Abgas und kälterer Frischluft führt. Bei einer gleichmäßigen Temperaturverteilung im Brennraum 5 kann eine späte, sequentielle Kraftstoffeinspritzung eine abgestufte Zündwilligkeit erbringen. Der früh eingespritzte Kraftstoff verteilt sich wegen der hohen Turbulenz des Luft/Restgasgemischs gleichmäßig und entzündet sich wegen der langen Reaktionszeit in demselben. Der spät eingespritzte Kraftstoff führt zu lokalen Senken der Zündwilligkeit aufgrund der Gemischabkühlung durch seine Verdampfung.

Durch die zeitliche Staffelung der Gemischbildung im Brennraum kann die Homogenität der Zündwilligkeit im Brennraum so verringert werden, daß sich weiterhin ein selbstbeschleunigender Prozeß einstellt, dessen Selbstbeschleunigung aber geringer ausfällt, was zu geringeren Druckanstiegen führt.

## Patentansprüche

1. Verfahren zum Betrieb eines Verbrennungsmotors mit Kompressionszündung sowie einer direkten Kraftstoffeinspritzung, bei dem
- zu Beginn des Verdichtungstaktes im Brennraum eine vorgemischte magere Kraftstoff/Luft-Ladung enthalten ist,
- die Ladung bis zur Selbstzündungsgrenze verdichtet wird, wobei während des Kompressionshubes Kraftstoff in den Brennraum eingespritzt wird,
**dadurch gekennzeichnet, daß**
- die in den Brennraum während des Kompressionshubes eingespritzte Kraftstoffmenge zeitlich und örtlich derart in mehreren Einspritzvorgängen eingebracht wird, daß in den Gemischbereichen mit der späteren Einspritzung die Zündwilligkeit verringert ist.

2. Verfahren nach Anspruch 1,
**dadurch gekennzeichnet, daß** die unterschiedlichen Zündwilligkeiten im Brennraum (5) während der Kompressionsphase (Z1 bis Zn) einen Gradienten der Zündwilligkeit bilden.

3. Verfahren nach Anspruch 1 oder 2,
**dadurch gekennzeichnet, daß** der Gradient der Zündwilligkeit durch den Einspritzzeitpunkt des Kraftstoffs bei innerer Gemischbildung beeinflußt wird, wobei die Zündwilligkeit im Brennraum (5) durch die Temperatur und den Druckverlauf des mageren Gemisches über die Zeit bestimmt wird.

4. Verfahren nach einem der Ansprüche 1 bis 3,
**dadurch gekennzeichnet, daß** unterschiedliche Verbrennungsbereiche und deren Charakterisierung bestimmbar sind, wobei die Bestimmung aus in Kennfeldern abgelegten Parametern oder durch Anwendung neuronaler Netze erfolgt.

5. Verfahren nach Anspruch 4,
**dadurch gekennzeichnet, daß** eine Regelung in Abhängigkeit der erfaßten Verbrennungsbereiche erfolgt, wobei die Verbrennung über die Gestaltung der Einspritzung und Gemischbildung optimiert wird.

6. Verfahren nach einem der Ansprüche 1 bis 5,
**dadurch gekennzeichnet, daß** eine Optimierung der Verbrennung durch Variation der Verdichtung und durch gezielte Inhomogenität des Luft/Kraftstoff-Gemisches erfolgt.

7. Verfahren nach Anspruch 6,
**dadurch gekennzeichnet, daß** das lokale Luft/Kraftstoff-Gemisch höchstens stöchiometrisch ist.

8. Verfahren nach einem der Ansprüche 1 bis 7,
**dadurch gekennzeichnet, daß** die Motorlast durch gleichzeitiges Einstellen von Einspritzzeitpunkt und -menge sowie durch Auslaß und Einlaßschluß variiert wird.

9. Verfahren nach einem der Ansprüche 1 bis 8,
**dadurch gekennzeichnet, daß** die Verbrennung auch bei stationären Betriebspunkten durch Variation von Verdichtung, Turbulenz und Einspritzung optimiert wird.

## Claims

1. Method for operating an internal combustion engine with compression ignition and with direct fuel injection, in which
- at the start of the compression stroke, the combustion space contains a premixed lean fuel/air charge,
- the charge is compressed to the auto-ignition limit, fuel being injected into the combustion space during the compression stroke,
**characterized in that**
- the fuel quantity injected into the combustion space during the compression stroke is introduced in a time-related and local manner in a plurality of injection operations in such a way that ignition performance is reduced in the mixture regions with later injection.

2. Method according to Claim 1, **characterized in that** the different ignition performances in the combustion space (5) form a gradient of the ignition performance during the compression phase (Z1 to Zn).

3. Method according to Claim 1 or 2, **characterized in that** the gradient of the ignition performance is influenced by the injection timing of the fuel in the case of internal mixture formation, the ignition performance in the combustion space (5) being determined by the temperature and the pressure profile of the lean mixture over time.

4. Method according to one of Claims 1 to 3, **characterized in that** different combustion regions and their characterization can be determined, determination being carried out from parameters stored in characteristic maps or by the use of neural networks.

5. Method according to Claim 4, **characterized in that** regulation is carried out as a function of the combustion regions detected, combustion being optimized by the organization of injection and mixture formation.

6. Method according to one of Claims 1 to 5, **characterized in that** optimization of combustion is carried out by the variation of compression and by the controlled inhomogeneity of the air/fuel mixture.

7. Method according to Claim 6, **characterized in that** the local air/fuel mixture is at most stoichiometric.

8. Method according to one of Claims 1 to 7, **characterized in that** the engine load is varied by the simultaneous setting of the injection timing and injection quantity and by the closing of the outlet and inlet.

9. Method according to one of Claims 1 to 8, **characterized in that** combustion is optimized, even in the case of stationary operating points, by the variation of compression, turbulence and injection.

## Revendications

1. Procédé pour faire fonctionner un moteur à combustion interne avec allumage sous compression et avec injection directe du carburant, dans lequel
- une charge carburant/air pauvre pré-mélangée est contenue dans la chambre de combustion au début du temps de compression,
- la charge est comprimée jusqu'à la limite d'auto-allumage, du carburant étant injecté dans la chambre de combustion pendant la course de compression,
**caractérisé en ce que**
- la quantité de carburant injectée dans la chambre de combustion pendant la course de compression est introduite en plusieurs opérations d'injection sur le plan temporel et local de telle sorte que dans les zones de mélange avec l'injection ultérieure, la spontanéité d'allumage est réduite.

2. Procédé selon la revendication 1, **caractérisé en ce que** les spontanéités d'allumage différentes dans la chambre de combustion (5) pendant la phase de compression (Z1 à Zn) forment un gradient de spontanéité d'allumage.

3. Procédé selon l'une ou l'autre des revendications 1 et 2, **caractérisé en ce que** le gradient de spontanéité d'allumage est influencé par l'instant d'injection du carburant lors d'une formation de mélange interne, la spontanéité d'allumage dans la chambre de combustion (5) étant déterminée par la température et par l'évolution de pression du mélange pauvre dans le temps.

4. Procédé selon l'une des revendications 1 à 3, **caractérisé en ce que** l'on peut déterminer des zones de combustion différentes et leur caractérisation, la détermination s'effectuant à partir de paramètres mémorisés dans des champs de caractéristiques ou par application de réseaux neuronaux.

5. Procédé selon la revendication 4, **caractérisé en ce qu'**une régulation s'effectue en dépendance des zones de combustion détectées, la combustion étant optimisée via la configuration de l'injection et de la formation de mélange.

6. Procédé selon l'une des revendications 1 à 5, **caractérisé en ce qu'**une optimisation de la combustion s'effectue par variation de la compression et par une inhomogénéité ciblée du mélange air/carburant.

7. Procédé selon la revendication 6, **caractérisé en ce que** le mélange local air/carburant est tout au plus stoechiométrique.

8. Procédé selon l'une des revendications 1 à 7, **caractérisé en ce que** la charge du moteur est variée par réglage simultané de l'instant et de la quantité d'injection ainsi que par la fin de l'échappement et de l'admission.

9. Procédé selon l'une des revendications 1 à 8, **caractérisé en ce que** la combustion est optimisée également à des points de fonctionnement stationnaires par variation de la compression, des turbulences et de l'injection.
